Europäisches Patentamt

European Patent Office

Office européen des brevets

(11) Veröffentlichungsnummer: **0 395 783**

**A1**

(12) **EUROPÄISCHE PATENTANMELDUNG**

(21) Anmeldenummer: **89108079.8**

(22) Anmeldetag: **05.05.89**

(51) Int. Cl.⁵: **G01P 3/44**

(43) Veröffentlichungstag der Anmeldung:
**07.11.90 Patentblatt 90/45**

(84) Benannte Vertragsstaaten:
**AT BE CH DE ES FR GB IT LI NL SE**

(71) Anmelder: **GMN GEORG MÜLLER NÜRNBERG AG**
**Äussere Bayreuther Strasse 230**
**D-8500 Nürnberg 13(DE)**

(72) Erfinder: **Ballhaus, Heribert, Dr.**
**Am Stadtpark 45**
**D-8500 Nürnberg(DE)**

(54) **Sensorlager zur Erfassung von Drehzahl und/oder Verdrehwinkel.**

(57) Die Erfindung betrifft ein Sensorlager zur Erfassung von Drehzahl und/oder Verdrehwinkel, wobei die in Wälzlagern vorhandenen Bauteile (10, 11) als Träger einer geraden Zahl diskreter Magnetfelder wechselnder Polarität benutzt werden, deren Rotation durch einen oder mehrere Halleffektsensoren (8), die auf ein ohnehin vorhandenes stationäres Bauteil aufgebracht sind, in ein elektrisches Signal gewandelt wird.

Figur 1

## Sensorlager zur Erfassung von Drehzahl und/oder Verdrehwinkel

Wälzlager, die mit Signaleinrichtungen versehen oder kombiniert sind, welche aus Betriebsparametern des Wälzlagers Signale ableiten, sind in vielfältigen Ausgestaltungen als sogenannte "Sensorlager" bereits bekannt. So sind im DGM 710 6270 Kraftmeßlager beschrieben, die zur Feststellung unzulässiger Kräfte auf Wälzlager eingesetzt werden und meist die kraft- proportionale Dehnung des Außenrings mittels Dehnmeßstreifen in ein elektrisches Signal wandeln.

Aus DE-OS 34 11 0005 ist ein Kraftmeßlager mit Schwerkraftaufnehmer bekannt.

Weitere Kraftmeßlager mit Dehnmeßstreifen in verschiedenen Anordnungen und Ausführungen sind durch die DE-OS 27 46 937, DE-6M 84 35 935, DE-OS 27 16 024, DE-OS 27 29 699, DE-OS 29 35 406 bekannt.

Kraftmeßlager mit piezoelektrischen Sensoren sind durch DE-OS 34 13 830 bekannt.

Drehmomentmeßlager mit mechanischer Verdrehwinkelbestimmung sind aus DE-OS 29 07 819 bekannt.

Drehzahlmessende Kraftmeßlager, die mit Dehnmeßstreifen aus einer periodischen Durchbiegung ein periodisches Kraftsignal erzeugen, aus dem die Drehzahl abgeleitet wird, sind aus DE-OS 26 42 045, DE-PS 26 42 080 B2 und DE-PS 26 47 440 B2 bekannt.

Durch Verwendung von Materialien mit unterschiedlichen Ausdehnungskoeftizienten können Lager der vorbeschriebenen Art zur gleichzeitigen Messung von Kraft und Temperatur benutzt werden, wie aus DE-PS 33 13 620 C1 bekannt.

Aus DE-OS 34 13 046 A1 ist bekannt, hierfür statt Dehnmeßstreifen piezokeramische Wandler zu benutzen.

Weiterhin bekannt ist aus DE-AS 22 14 859 , die Drehzahl von rotierenden Körpern durch Detektieren einer radioaktiven Markierung zu erfassen.

Zur Drehzahlmessung von Wälzkörpern in rotierenden Wälzlagern ist aus DE-OS 22 23 704 weiterhin die Erzeugung von Luftschall bekannt, wobei die Tonhöhe eines sirenenartigen Dauertones proportional der Drehzahl ist.

Zur Drehzahlüberwachung ist ferner aus DE-OS 29 41 564 eine Anordnung bekannt, bei der durch Vorbeigang der Wälzkörper eines rotierenden Kugellagers periodisch Spannungen in einer Spule induziert werden, die einen Dauermagneten umgibt.

Weiterhin bekannt ist aus DE-OS 25 05 802 ein optischer bzw. induktiv wirkender Drehzahlgeber, der an ein konventionelles Kugellager angebracht wird.

Bekannt ist weiterhin aus US-PS 47 32 494 ein Sensorlager zur Messung von Drehzahlen bei dem ein vielpoliger Magnetring, der z. B. aus einem Draht besteht, gemeinsam mit einem antimagnetischen Trägerring auf den Innenring eines Wälzlagers aufgebracht wird. Seitlich des nichtrotierenden Außenrings sind ein oder mehrere Hallsensoren angebracht, die letztlich interessierende Wellendrehzahl entspricht der Innenringdrehzahl.

Der vorliegenden Erfindung liegt die Aufgabe zugrunde, ein preiswertes, einfaches Sensorlager zu schaffen, mit dem die Drehzahl einer Welle oder Nabe gemessen werden kann, ohne daß externe Drehzahlgeber erforderlich sind und ohne daß in herkömmliche Wälzlager wesentliche zusätzliche mitrotierende und stationäre Bauteile eingefügt werden müssen. Diese Aufgabe wird gemäß den Patentansprüchen gelöst. Die erfindungsgemäßen Sensorlager haben insbesondere den Vorteil, daß Kosten vermieden und die üblichen Lagerbreiten beibehalten werden können. Bevorzugte Ausführungsformen der Erfindung sind nachfolgend anhand der Zeichnung im einzelnen beschrieben.

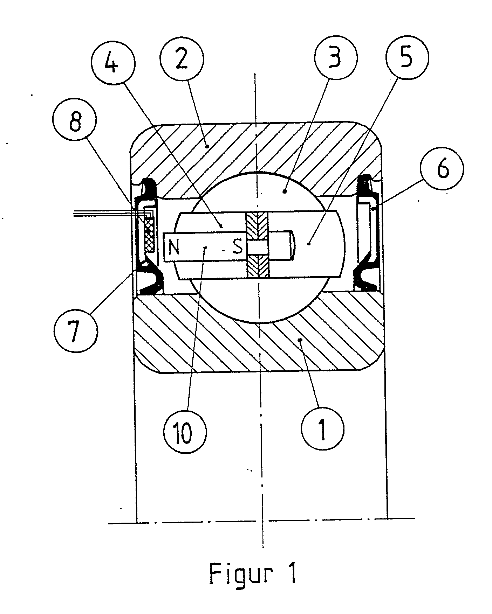

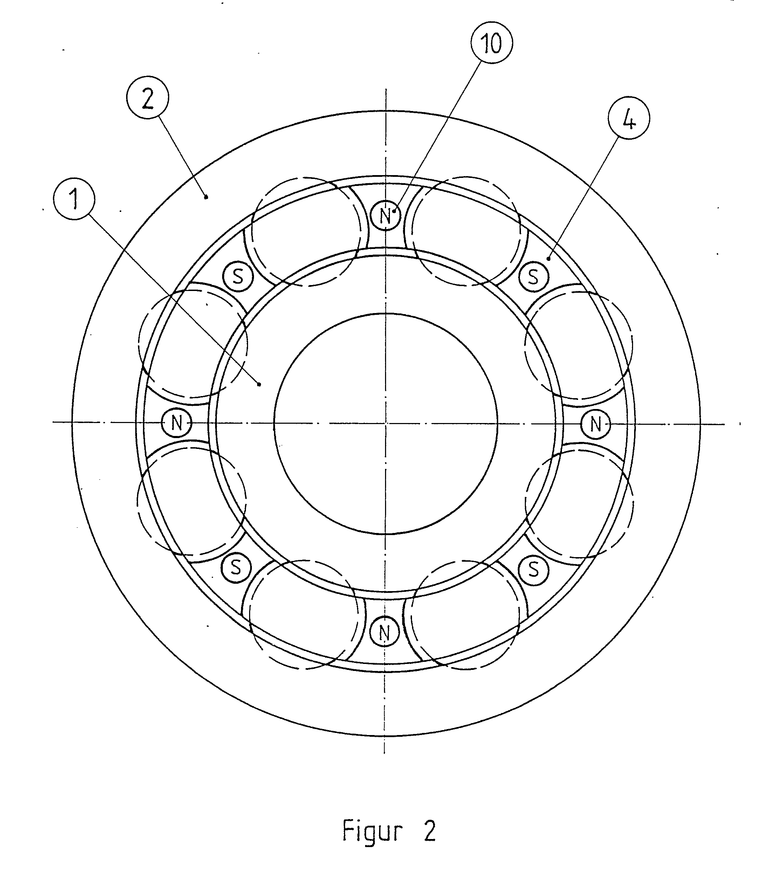

Die Figuren 1-2 zeigen ein bevorzugtes Ausführungsbeispiel im Querschnitt und der Seitenansicht.

Der Innenring (1), der Außenring (2), der Kugelsatz (3) und die beiden Käfighälften (4) und (5) und die rechte Dichtscheibe (6) entsprechen völlig einem üblichen Kugellager.

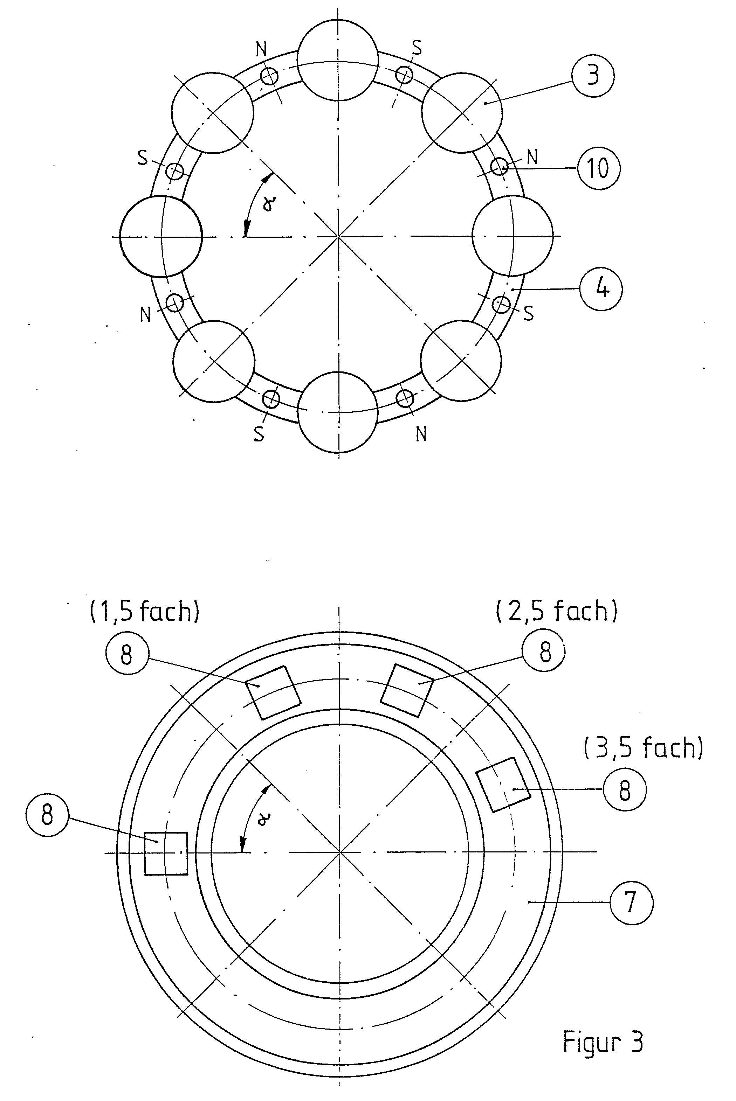

Auf die Innenseite der linken Dichtscheibe (7) sind, wie aus Figur 3 ersichtlich, zwei oder drei Halleffektsensoren (8) im 1.5-fachen, 2.5-fachen, 3.5-fachen bzw. 1.25-fachen, 2.25-fachen, 3.25-fachen Abstand zweier Kugeln angebracht.

Die Nieten (10) des Käfigs sind aus thermoplastisch gebundenem Strontiumferrit hergestellt und werden bei der Lagermontage durch Anschmelzen unter Druck verformt.

Die Magnetisierung mit wechselnder Polarität, bezeichnet mit "N" und "S" für Nord und Süd, erfolgt vor oder nach dem Einpressen in einer dafür geeigneten Vorrichtung.

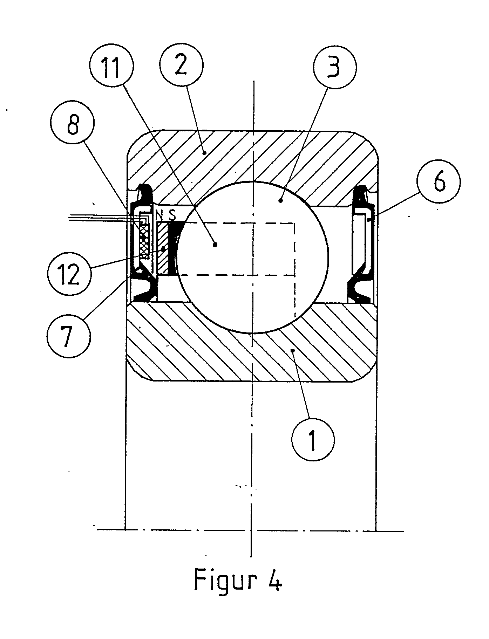

Figur 4 zeigt einen einteiligen Kunststoffkäfig (11) mit aufgeklebten Einzelmagneten (12). Die Polarität ist, wie in Fig. 1-3, mit "N" für Nord bzw. "S" für Süd gekennzeichnet. Die gerade Anzahl von Magneten (12) kann von der Anzahl und Teilung der Wälzkörper (3) abweichen.

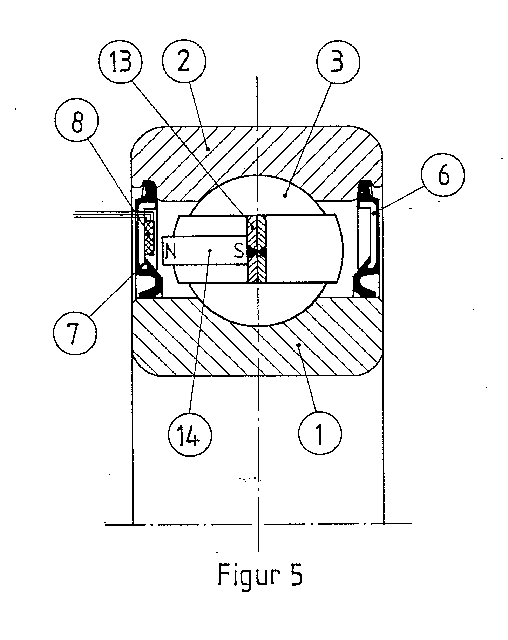

Figur 5 zeigt einen zweiteiligen, punktgeschweißten Stahlblechkäfig aus antimagnetischem Stahl, auf dessen Stege (13) Einzelmagnete (14) aufgeklebt sind.

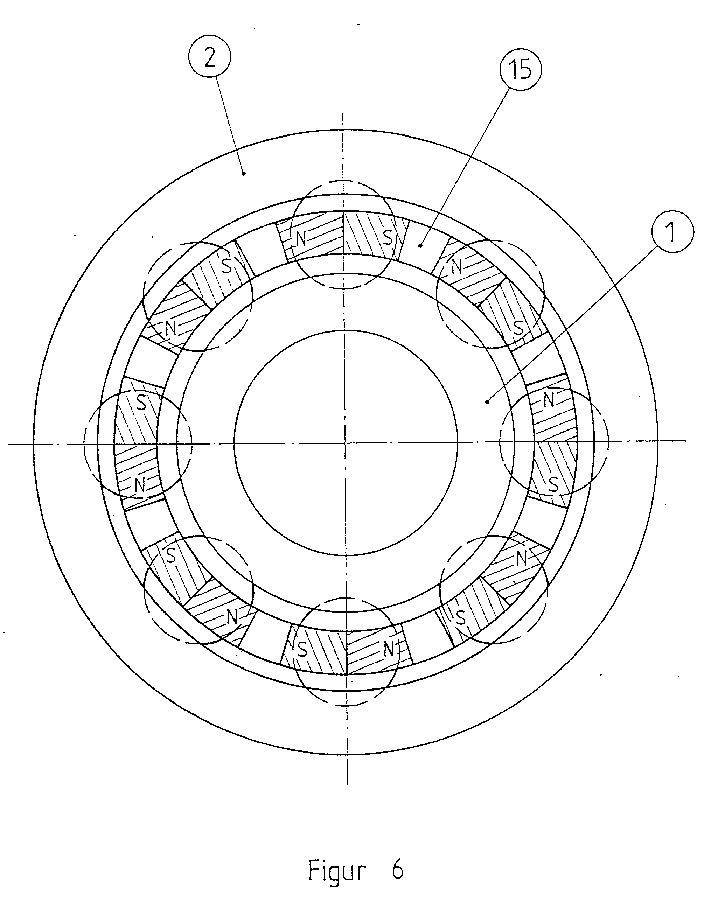

Figur 6 zeigt einen einteiligen Kunststoffkäfig (15) hergestellt aus glasfaserverstärktem Polyamid mit 50 % Gewichtsanteilen Strontiumferrit. Die magnetisierten Bereiche sind schraffiert, die Polarität ist mit "N" und "S" bezeichnet.

Bei Betrieb des Lagers liefert jeder der Halleffektsensoren (8) ein Rechtecksignal, dessen Grundfrequenz mit der Kugeldurchlauffrequenz übereinstimmt.

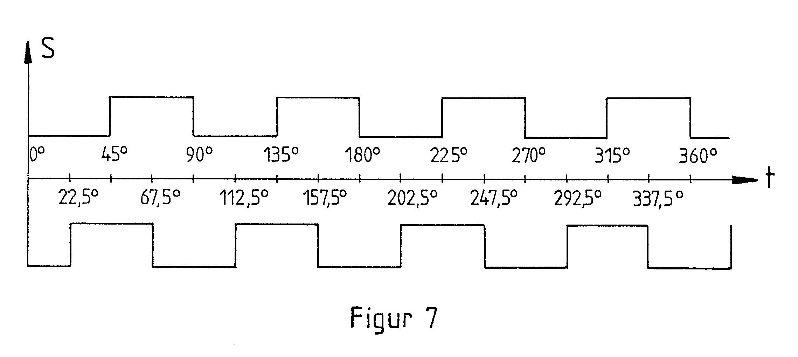

Durch versetzte Anordnung der Sensoren, z.B. im 1.5-fachen Verhältnis eines Kugelabstandes, liefern die Sensoren zwei phasenverschobene Rechtecksignale, Figur 7, deren Phasenverschiebung genau der 0.5-fachen Zeit für den Vorbeilauf zweier Kugeln entspricht, wenn das Lager mit konstanter Drehzahl betrieben wird.

Die Drehzahlmessung ist an sich schon durch Frequenzmessung eines der beiden Rechtecksignale auf einfache Weise möglich, da die Durchlauffrequenz der Wälzkörper (3) kinematisch mit der Drehzahl des Innenrings (2) verknüpft ist.

Durch Demodulation der Phasenverschiebung der beiden sonst gleichen Signale mit üblichen integrierten Schaltkreisen, können selbst geringfügige Drehzahländerungen innerhalb eines halben Kugeldurchgangs mit praktisch beliebig hoher Genauigkeit bestimmt werden. Bei Verwendung eines dritten Sensors im 1.25-fachen, 2.25-fachen usw. Abstand der Wälzkörper kann die Genauigkeit durch Halbierung des Bezugszeitintervalls weiter verbessert werden.

Das Phasensignal fällt mit einer Grundfrequenz an, die ihrerseits wieder der Wälzkörperdurchlauffrequenz entspricht. Bei einer Wellendreh- zahl von z.B. 1800 min$^{-1}$ und 8 Kugeln etwa 96 mal pro Sekunde.
Durch Division des momentanen Phasensignals mit vorangegangenen Phasensignalen entsteht in einer geeigneten Auswertungsschaltung 96 mal pro Sekunde ein Gradient, d.h. ein direktes Maß hoher Genauigkeit für eine Beschleunigung oder Verzögerung der Rotation.

Diese Möglichkeit ist besonders interessant für fortgeschrittene Antiblockiersysteme, höherwertige Positionierantriebe motorisch betriebene Servoventile und ähnliche Anwendungen.

Die beschriebene Erfindung ermöglicht bei Schrittmotoren, die ohnehin kugelgelagert sind, auf einfache Weise ein direktes sogenanntes feed back, ob die von der Steuerung vorgegebene Anzahl von Schritten tatsächlich durchlaufen wird.

Übliche Positionierantriebe benötigen hierfür einen zusätzlichen Drehgeber.

## Ansprüche

1.) Sensorlager zur Erfassung von Drehzahl oder/und Verdrehwinkel, dadurch gekennzeichnet, daß die in Wälzlagern vorhandenen Bauteile als Träger einer geraden Zahl diskreter Magnetfelder wechselnder Polarität benutzt werden, deren Rotation durch einen oder mehrere Halleffektsensoren, die auf ein ohnehin vorhandenes stationäres Bauteil aufgebracht sind, in ein elektrisches Signal gewandelt wird.

2.) Sensorlager nach Anspruch 1, dadurch gekennzeichnet, daß als Träger der diskrekten Magnetfelder die Nieten eines zweiteiligen, genieteten Blechkäfigs, der aus antimagnetischem Material hergestellt ist, benutzt werden und daß die Nieten selbst aus einem dauermagnetischen Material, vorzugsweise spritzfähigem kunststoffgebundenem Barium- oder Strontiumferrit, hergestellt sind und daß das Lager eine gerade Zahl von Wälzkörpern enthält.

3.) Sensorlager nach Anspruch 1, dadurch gekennzeichnet, daß kunststoffgebundene oder keramisch gebundene Einzelmagnete auf die Stege eines gespritzten, einteiligen Kunststoffkäfig geklebt sind, wobei die Anzahl der Wälzkörper gerade oder ungerade sein kann.

4.) Sensorlager nach Anspruch 1, dadurch gekennzeichnet, daß Einzelmagnete in die Stege eines gespritzten, einteiligen Kunststoffkäfigs eingegossen sind und daß das Lager eine gerade Zahl von Wälzkörpern enthält.

5.) Sensorlager nach Anspruch 1, dadurch gekennzeichnet, daß der einteilige Käfig aus spritzfähigem magnetisierbaren Kunststoff hergestellt wird und durch geeignete Magnetisierung diskrete Magnetfelder wechselnder Polarität erzielt werden.

6.) Sensorlager nach Anspruch 1 und 2, dadurch gekennzeichnet, daß Einzelmagnete auf die Stege eines geschweißten, zweitteiligen Stahlblechkäfigs geklebt sind.

7. Sensorlager nach Anspruch 1, dadurch gekennzeichnet, daß als Träger für die Halleffektsensoren die Deck- oder Dichtscheibe eines Wälzlagers benutzt wird.

8.) Sensorlager nach Anspruch 1 und 7, dadurch gekennzeichnet, daß die Halleffektsensoren auf eine flexible miniaturisierte, ringförmige Leiterplatte vormontiert sind, die gleichzeitig als Zuleitungskabel dient und mit der Deck- und Dichtscheibe verklebt wird.

9.) Sensorlager nach Anspruch 1, dadurch gekennzeichnet, daß die Halleffektsensoren ohne Gehäuse auf den Metallträger einer üblichen Gummidichtscheibe geklebt und anschließend mit dem Metallträger einvulkanisiert werden.

10.) Sensorlager nach Anspruch 1, dadurch gekennzeichnet, daß eine gerade Zahl von Wälzkörpern eines Rollenlagers magnetisiert und mit wechselnder Polarität montiert sind.

11.) Sensorlager nach Anspruch 1, dadurch gekennzeichnet, daß durch eine Anordnung von zwei Halleffektsensoren im 1.5-fachen, 2.5-fachen oder 3.5-fachen Abstand der Wälzkörper zwei phasenverschobene Signale erzeugt werden und durch Phasendemodulation ein periodisches, digitales oder analoges drehzahlproportionales elektrisches Signal hoher Auflösung entsteht.

12.) Sensorlager nach Anspruch 1 und 11, dadurch gekennzeichnet, daß durch eine Anordnung von drei Halleffektsensoren im 1.5-fachen bzw. 2.5-fachen und im 1.25-fachen bzw. 2.25-fachen oder 3.25-fachen Abstand der Wälzkörper drei phasenverschobene Signale erzeugt werden, wobei z.B. die Phasenverschiebung zwischen den Signalen der Sensoren 1 und 2 der halben Durchgangszeit der umlaufenden Wälzkörper, die Phasenverschiebung zwischen den Sensoren 1 und 3 bzw. 2 und 3 einem viertel der Durchgangszeit der umlaufenden Wälzkörper entspricht.

13.) Sensorlager nach Anspruch 1, 11 und 12, dadurch gekennzeichnet, daß durch Gradientenbildung der periodischen Phasensignale Beschleunigungen bzw. Verzögerungen unmittelbar gemessen werden können.

Figur 1

Figur 2

N · S · 3 · 10 · S · N · 4 · α · S · N

(1,5 fach) · (2,5 fach)

8 · 8 · (3,5 fach) · 8

8 · α · 7

Figur 3

Figur 4

Figur 5

EP 0 395 783 A1

Figur 6

S

0°    45°    90°    135°    180°    225°    270°    315°    360°

22,5°    67,5°    112,5°    157,5°    202,5°    247,5°    292,5°    337,5°

t

Figur 7

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 025 693  (SIEMENS)<br>* Seite 3, Zeilen 1-23; Figur 1 * | 1-6 | G 01 P    3/44 |
| Y | | 11,12 | |
| | --- | | |
| Y | EP-A-0 250 275  (S.N.R.)<br>* Spalte 2, Zeilen 52-61; Figuren 2A,5 * | 11,12 | |
| D | | | |
| | --- | | |
| A | CH-A-  387 965  (BRISTOL SIDDELEY ENGINES LTD)<br>* Seite 4, Zeilen 63-96; figur 14 * | 10 | |
| | ----- | | |

| | RECHERCHIERTE SACHGEBIETE (Int. Cl.5) |
|---|---|
| | G 01 P<br>F 16 C |

Der vorliegende Recherchenbericht wurde für alle Patentansprüche erstellt

| Recherchenort | Abschlußdatum der Recherche | Prüfer |
|---|---|---|
| DEN HAAG | 24-01-1990 | HANSEN P. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................................
& : Mitglied der gleichen Patentfamilie, übereinstimmendes
    Dokument

EPO FORM 1503 03.82 (P0403)